# EUROPÄISCHE PATENTANMELDUNG

(11) **EP 1 734 262 A1**
(43) Veröffentlichungstag der Anmeldung: **20.12.2006**
(21) Anmeldenummer: 05012664.8
(22) Anmeldetag: 13.06.2005
(51) Int. Cl.: F16B 5/02, F16B 31/04

(54) **Isolierte Schrauben**

(71) Anmelder: SIEMENS AKTIENGESELLSCHAFT, 80333 München (DE)
(72) Erfinder: Kern, Torsten-Ulf, Dr., 46485 Wesel (DE)

(57) **Zusammenfassung**

Die Erfindung betrifft eine Flanschverbindung (1) zur Verbindung von Bauteilen (2, 3), die einander gegenüberliegende Flansche (4, 6) und zumindest ein Verbindungselement (7) aufweist. Das Verbindungselement (7) ist in in den Flanschen (4, 6) eingebrachten, zueinander fluchtenden Bohrung (8, 9) aufgenommen. Die Bohrungen (8, 9) in den Flanschen (4,6) sind als Durchgangsbohrungen derart ausgestaltet, dass zwischen dem Verbindungselement (7) mit seinem Schaft (11) und einer jeweiligen Innenwand (12) der Durchgangsbohrung ein radialer Spalt (13) gebildet ist, der derart mit einer thermisch isolierenden Schicht (14) ausgefüllt ist, dass ein Wärmeübergang von den Flanschen (4, 6) zu dem Verbindungselement (7) zumindest verringert ist.

## Beschreibung

Die Erfindung betrifft eine Flanschverbindung zur Verbindung von Bauteilen, die einander gegenüberliegende Flansche und zumindest ein Verbindungselement aufweist, wobei das Verbindungselement in in den Flanschen eingebrachten, zueinander fluchtenden Bohrungen aufgenommen ist.

Derartige Flanschverbindungen sind z. B. aus dem Maschinenbau bekannt. Beispielsweise weisen Wärmekraftmaschinen, insbesondere Dampfturbinen, ein Innengehäuse und ein das Innengehäuse umgebendes Außengehäuse auf. Die jeweiligen Gehäuse weisen z. B. einander zugeordneten Gehäusehälften auf, die miteinander kraftformschlüssig verschraubt werden, wobei an den aneinander liegenden Gehäusehälften Flanschfortsätze zur Bildung der Flanschverbindung vorgesehen sind.

Die DE 197 26 750 C2 betrifft eine Verbindung von Platten, insbesondere Flanschen mit einer Schraube und einer Mutter, wobei die Mutter direkt oder über eine Unterlegscheibe an der ersten Platte anliegt. Der Kopf der Schraube liegt an einer ersten Stirnfläche einer inneren Hülse an. Die gegenüberliegende zweite Stirnfläche der inneren Hülse liegt an einem Innenflansch einer äußeren Hülse an. Dem den Innenflansch gegenüberliegender äußerer Flansch der äußeren Hülse liegt an der zweiten Platte an. Die Wärmeausdehnung der inneren Hülse entspricht mindestens der Summe der Wärmeausdehnung der äußeren Hülse und der Schraube zwischen Kopf und Mutter. Damit soll die innere Hülse sowohl die Wärmeausdehnung der äußeren Hülse als auch der Schraube kompensieren, weswegen die innere Hülse aus einem anderen Werkstoff hergestellt ist als die übrigen Teile der Verbindung.

In der DE-OS 37 33 243 ist ein Verbindungsbolzen zum Verspannen von miteinander zu verbindenden Teilen unter Verwendung von Spannmuttern offenbart. Ein Bolzenkörper weist eine innere Axialhohlbohrung mit zwei Enden auf, von denen mindestens das eine Ende offen ist. Ein Kolbenelement ist koaxial in der Hohlbohrung mit Abstand zwischen der äußeren Umfangsfläche des Kolbenelementes und der Innenwand des die Hohlbohrung bildenden Bolzenkörpers angeordnet. Das offene Ende der Hohlbohrung wird über eine Stopfenanordnung verschlossen. Eine Dichtung befindet sich an der äußeren Umfangsfläche des Kolbenelementes, um den Raum in einen als Druckraum dienenden ersten Raum, in den unter Druck stehendes Fluid eingeleitet wird, und einen als Temperatureinstellraum dienenden zweiten Raum, in den ein Wärmeträger eingeleitet wird, zu unterteilen. Weiter ist ein Anschluss zum Einleiten des unter Druck stehenden Fluids in den ersten Raum vorgesehen, wobei auch ein Anschluss zum Einleiten des Wärmeträgers in den zweiten Raum vorgesehen ist.

Die Verschraubung von Gehäusehälften und Ventilteilen stellt im Turbinenbau ein wesentliches Konstruktionsmerkmal dar. Durch der Erhöhung der Dampfparameter, veränderte Konstruktion und optimierte Werkstoffausnutzung werden die Grenzen der aktuellen Turbosatzausführungen, beispielsweise bei so genannten K-, HMN- und E-TT-Turbinen, zum Teil bereits erreicht. K-Turbinen sind so genannte Kompaktturbinen, bei denen Hoch- und Mitteldruck in einem Außengehäuse angeordnet sind, wobei die Abkürzung E bedeutet, dass Mittel- und Niederdruck in einem Außengehäuse angeordnet sind. Die Abkürzung TT bedeutet im Sinne der Erfindung Teilturbine, so dass mit E-TT eine Mitteldruckkomponente einer Niederdruckturbine vorgeordnet ist. Die Abkürzung HMN bedeutet im Sinne der Erfindung Hochdruck, Mitteldruck, Niederdruck.

In einigen konstruktiven Ausführungen, z. B. am Innengehäuse von K-TT-Turbinen, liegen in einem Einströmbereich am Innengehäuse eine hohe Temperatur und Druck vor, während Außenfasern des Innengehäuses mit niedrigeren Dampftemperaturen zwischen Innen- und Außengehäuse beaufschlagt werden. Beispielsweise liegt eine Einströmtemperatur bei 600 °C, wobei eine Dampfraumtemperatur bei ca. 300 °C liegt, wobei die Dampfraumtemperatur in dem Bereich zwischen dem Innengehäuse und dem Außengehäuse anliegt. Üblicherweise werden die Gehäusehälften bzw. die Ventilteile mittels Schraubverbindungen zu der Flanschverbindung hergestellt. Hierbei ragen die Schraubenköpfe bzw. die Schraubenmuttern bei durchgehenden Schrauben in den Raum der geringeren Temperatur (beispielsweise 300 °C). Da die Gehäusehälften üblicherweise aus einem wärmeleitendem Metall bestehen, wird die Temperatur in dem Innengehäuse über das Material des Innengehäuses zur Schraube transportiert. Selbstverständlich treten hier gewisse Temperaturverluste auf, so dass die Schraubentemperatur kleiner ist als die Einströmtemperatur. Allerdings ist die mittlere Schraubentemperatur größer als die Temperatur an den Außenfasern des Innengehäuses. Beispielweise weist die Temperatur an den Außenfasern des Innengehäuses einen Betrag von ca. 450 bis 480 °C auf.

Durch diese relativ hohe Temperaturbelastung der Schraube weist die Flanschverbindung ein relativ schlechtes Relaxationsverhalten (hoher Spannungsverlust), hervorgerufen durch metallphysikalische Prozesse, auf. Hierdurch verringert sich die Festigkeit der Flanschverbindungen, so dass Undichtigkeiten insbesondere an dem Innengehäuse auftreten können, was ein Öffnen der miteinander verbundenen Bauteile (Teilfugen) des Außengehäuses nach relativ kurzer Standzeit bzw. Betriebszeit erforderlich macht, um die Schrauben im Innengehäuse nachzuspannen oder um eine neue Verbindung einzubauen.

Um dem entgegenzutreten, wurden bisher Maßnahmen getroffen, die darin zielten, dass beispielsweise Schraubenabmessungen erheblich erhöht wurden und/oder angepasste, höherfeste Schraubenwerkstoffe, z. B. Ni-/Co-Basislegierungen Verwendung fanden. Diese Maßnahmen führten jedoch nachteiliger Weise zu einer Erhöhung der Herstellungskosten der Dampfturbinen. Dies auch deshalb, da üblicherweise eine Vielzahl von Schrauben zur Herstellung der Flanschverbindung vorgesehen sind.

Der Erfindung liegt daher die Aufgabe zugrunde, eine Flanschverbindung der eingangs genannten Art mit einfachen Mitteln dahin gehend zu verbessern, dass ein mögliches Öffnen der Flanschverbindung auch nach relativ langen Zeiten über die gesamte Auslegungszeit der Dampfturbine vermieden werden kann, wobei die Flanschverbindung ein verbessertes Relaxationsverhalten aufweisen soll, womit eine konstruktive Ausführbarkeit erheblich verbessert werden kann.

Erfindungsgemäß wird die Aufgabe dadurch gelöst, dass die Bohrungen in den Flanschen als Durchgangsbohrungen derart ausgestaltet sind, dass zwischen dem Verbindungselement mit seinem Schaft und einer jeweiligen Innenwand der Durchgangsbohrung ein radialer Spalt gebildet ist, der derart mit einer thermisch isolierenden Schicht ausgefüllt ist, dass ein Wärmeübergang von den Flanschen zu dem Verbindungselement zumindest verringert ist.

Dadurch, dass die Bohrungen als Durchgangsbohrungen ausgestaltet sind, ist sichergestellt, dass das Verbindungselement mit einem Ende nicht in einem der Gehäuseteile verankert ist, wobei der Spalt zwischen den Flanschen und dem Verbindungselement in radialer Richtung derart groß ausgestaltet ist, dass die thermisch isolierende Schicht den Wärmeübergang von den Flanschen zu dem Verbindungselement zumindest verringert bzw. hemmt.

Um den Wärmeübergang weiter zu reduzieren, ist es zweckmäßig im Sinne der Erfindung, wenn das Verbindungselement an seinen freien Enden jeweils ein Konterelement trägt, das zu zugeordneten Flanschoberflächen bevorzugt thermisch isoliert ist oder thermisch isoliert sein kann. Als thermische Isolierung kann bevorzugt ein thermisch isolierendes Material Verwendung finden, welches einen Wärmeübergang von den Flanschoberflächen auf die Konterelemente reduziert bzw. hemmt, so dass das Verbindungselement selbst dadurch vorteilhaft thermisch von den Bauteilen bzw. den Flanschen isoliert ist.

Günstig im Sinne der Erfindung ist, wenn das Verbindungselement als Schraubenbolzen mit einem gewindefreien Schaft und jeweils gegenüberliegenden freien Enden ausgestaltet ist, wobei die jeweiligen freien Enden ein Gewinde zur Aufnahme des Konterelementes aufweisen, wobei das Konterelement bevorzugt als Schraubenmutter bzw. Mutter ausgeführt ist.

Vorteilhaft im Sinne der Erfindung ist vorgesehen, dass Auflageflächen der Konterelemente an den zugeordneten Flanschoberflächen oder die Konterelemente selbst einseitig mit wärmeisolierendem Material beschichtet sind, so dass der Wärmeübergang aus den Flanschen zum Verbindungselement hin verringert ist. Das Verbindungselement ist vorzugsweise als Bolzenschraube ausgeführt, an deren freien Enden das Konterelement aufschraubbar ist. Natürlich kann das Verbindungselement aber auch als Bolzenschraube mit einem einseitig angeordneten Kopf ausgestaltet sein, wobei das Konterelement an dem zum Kopf gegenüberliegenden freien Ende aufschraubbar ist. Selbstverständlich wäre dann der Kopf an seiner Auflagefläche ebenfalls mit einer thermisch isolierenden Beschichtung versehen. Möglich ist z.B. auch, dass dem oder den Konterelementen oder dem Kopf bzw. den zugeordneten Flanschoberflächen ein separates, thermisch isolierendes Bauteil zugeordnet ist, das aus einem Isoliermaterial gebildet und beispielsweise als Lochscheibe ausgestaltet ist. Aufgrund der Anordnung der thermisch isolierenden Schicht zum einen in dem radialen Spalt und vorzugsweise zum anderen an den Auflageflächen der Konterelemente bzw. des Kopfes wird das Verbindungselement somit quasi gänzlich thermisch von den Bauteilen bzw. von den Flanschen getrennt, so dass ein Wärmeübergang von dem Bauteil höherer Temperatur (Innengehäuse) auf das Bauteil niedriger Temperatur (Verbindungselement) zumindest reduziert bzw. gehemmt ist.

In einer vorteilhaften Ausgestaltung der Erfindung ist vorgesehen, dass die isolierende Schicht an den jeweiligen Endbereichen des Schaftes, bezogen auf dessen Mittelbereich, zumindest im Montagezustand der Flanschverbindung dünner ist als im Mittelbereich. Dieser vorteilhaften Ausgestaltung der Erfindung liegt die Erkenntnis zugrunde, dass die Temperatur an den Außenfasern der Flansche geringer ist als in ihrem Mittelbereich, so dass hier auch ein geringerer Wärmeübergang auf das Verbindungselement vorliegen kann. Vorteilhaft kann somit Isoliermaterial eingespart werden.

In einer weiteren vorteilhaften Ausgestaltung der Erfindung ist vorgesehen, dass das Verbindungselement eine zentrale Kühlbohrung aufweist, wobei die zentrale Kühlbohrung vorzugsweise als Durchgangsbohrung ausgestaltet sein kann. Da das Verbindungselement in dem Bereich mit der geringeren Dampfraumtemperatur angeordnet ist, wird somit vorteilhaft eine Kühlung des Verbindungselementes von innen her erreicht, da der relativ kühle Dampf(bezogen auf die Einströmtemperatur in das Innengehäuse) zwischen dem Innengehäuse und dem Außengehäuse durch die Durchgangsbohrung bzw. durch die zentrale Kühlbohrung in dem Verbindungselement strömen kann.

Damit wird eine verbesserte Flanschverbindung zur Verfügung gestellt, bei der mit einfachen Mitteln ein Wärmeübergang von den relativ heißen Flanschen zu dem relativ kühlen Verbindungselement durch das thermisch isolierende Material zumindest verringert ist. Damit stellt sich überraschenderweise durch die beispielsweise im Betrieb der Dampfturbine abgesenkte Temperatur des Verbindungselementes ein verbessertes Relaxationsverhalten ein. Vorteilhafterweise kann damit auf einen Werkstoffwechsel der Verbindungselemente verzichtet werden, wobei auch eine Vergrößerung von Schraubenabmessungen vermieden werden kann. Völlig überraschend ist hierbei, dass die Relaxations-Endspannungen aufgrund der Temperaturabhängigkeit und der vorliegenden Temperaturabsenkung höher sind, womit eine konstruktive Ausführbarkeit der Dampfturbine erheblich verbessert ist.

Die Flanschverbindung eignet sich insbesondere zur Verbindung von Gehäuseteilen in einer Turbine, insbesondere in einer Dampfturbine.

Als Flanschverbindung im Sinne der Erfindung ist nicht nur das Verbinden der Gehäuseteile, die einen flanschähnlichen Fortsatz aufweisen, gemeint, sondern auch beispielsweise Anbindungen von Ventilteilen. Von daher ist der Begriff Flanschverbindung in der Beschreibung und den Ansprüchen nicht nur auf eine solche beschränkt, sondern umschließt alle möglichen plattenähnlichen Verbindungen.

Weitere vorteilhafte Ausgestaltungen der Erfindung sind in den Unteransprüchen und der folgenden Figurenbeschreibung offenbart. Es zeigen:
- Fig. 1: eine Flanschverbindung im Querschnitt, und
- Fig. 2: die Flanschverbindung aus Figur 1 an einem Innengehäuse einer Dampfturbine.

In den unterschiedlichen Figuren sind gleiche Teile stets mit denselben Bezugszeichen versehen, so dass diese in der Regel auch nur einmal beschrieben werden.

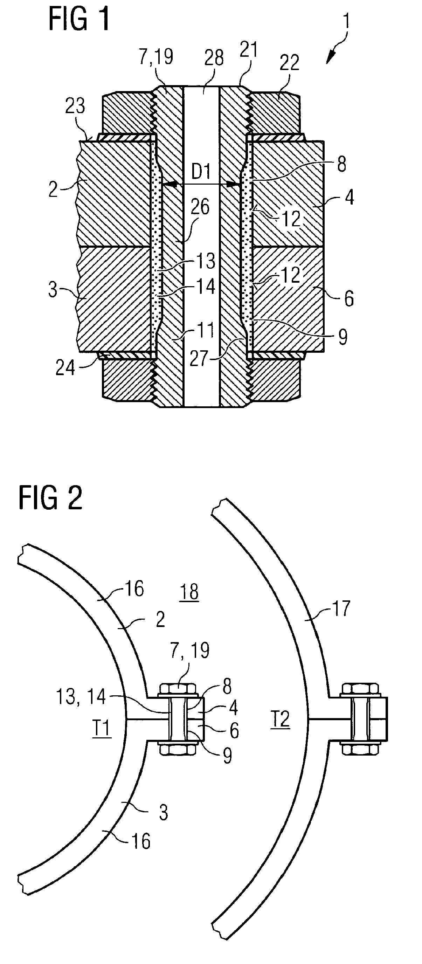

Figur 1 zeigt eine Flanschverbindung 1 zur Verbindung von Bauteilen 2, 3, die einander gegenüberliegende Flansche 4, 6 und zumindest ein Verbindungselement 7 aufweist, wobei das Verbindungselement 7 in in den Flanschen 4, 6 eingebrachten, zueinander fluchtenden Bohrungen 8, 9 aufgenommen ist. Das Verbindungselement 7 ist zumindest mit seinem Schaft 11 thermisch von den Bauteilen 2,3 bzw. den Flanschen 4,6 getrennt, so dass ein Wärmeübergang von den Bauteilen 2,3 bzw. von den Flanschen 4, 6 zu dem Verbindungselement 7 zumindest verringert bzw. gehemmt ist.

Die Bohrungen 8, 9 sind als Durchgangsbohrungen derart ausgestaltet, dass zwischen dem Verbindungselement 7 mit seinem Schaft 11 und einer jeweiligen Innenwand 12 der Durchgangsbohrungen 8, 9 ein radialer Spalt 13 gebildet ist, der derart mit einer thermisch isolierenden Schicht 14 ausgefüllt ist, dass ein Wärmeübergang von den Flanschen 4, 6 zu dem Verbindungselement 7 verringert ist.

Die Bauteile 2 und 3 sind als Gehäusehälften eines Innengehäuses 16, beispielsweise einer Turbine, insbesondere einer Dampfturbine, ausgestaltet. Die Flansche 4, 6 sind dabei jeweils einer Gehäusehälfte zugeordnet, so dass auch von einem Oberflansch bzw. Unterflansch gesprochen werden kann.

Die Bauteile 2, 3 bilden im montierten Zustand ein Innengehäuse 16 der Dampfturbine, das von einem Außengehäuse 17 umgeben ist. In dem Innengehäuse 16 herrscht beispielsweise eine Temperatur T1 von ca. 600 °C wobei in dem Zwischenraum 18 zwischen dem Innengehäuse 16 und dem Außengehäuse 17 eine Temperatur T2 von ca. 300 °C vorliegt.

In dem dargestellten Ausführungsbeispiel ist das Verbindungselement 7 als Schraubenbolzen 19 ausgestaltet. Der Schraubenbolzen 19 weist an seinen freien Enden 21 jeweils ein Gewinde zur Aufnahme eines Konterelementes 22 auf, was in dem dargestellten Ausführungsbeispiel als Mutter ausgestaltet ist. Die Konterelemente 22 sind jeweils zu zugeordneten Flanschoberflächen 23 thermisch isoliert, so dass ein Wärmeübergang von den Flanschen 4, 6 zu dem Verbindungselement 7 bzw. zu den Konterelementen 22 zumindest reduziert bzw. gehemmt ist. Zur thermischen Isolierung weisen die Konterelemente 22 an ihren Auflageflächen zu den zugeordneten Flanschoberflächen 23 eine thermisch isolierende Beschichtung 24 auf. Selbstverständlich kann die thermisch isolierende Beschichtung 24 auch an den Flanschoberflächen 23 angeordnet, oder als separates Bauteil, beispielsweise als Lochscheibe ausgeführt sein.

Der Schaft 11 des Verbindungselementes 7 bzw. des Schraubenbolzens 19 weist einen Mittelbereich 26 auf, der in seinem Außendurchmesser D1, bezogen auf die jeweiligen Endbereiche 27, reduziert ist. Damit weist der radiale Spalt 13 zumindest im montierten Zustand im Mittelbereich 26 in radialer Richtung gesehen einen größeren Betrag auf als im jeweiligen Endbereich 27, so dass die isolierende Schicht 14 an den jeweiligen Endbereichen 27 des Schaftes 11, bezogen auf dessen Mittelbereich 26, zumindest im Montagezustand dünner ist als im Mittelbereich 26.

In dem Verbindungselement 7 ist eine zentrale Kühlbohrung 28 vorgesehen, die in dem dargestellten Ausführungsbeispiel als Durchgangsbohrung ausgestaltet ist.

Die isolierende Schicht 14 weist einen derartigen Wärmeübergangskoeffizienten auf, dass die von den Flanschen 4, 6 aufgenommene Wärme zumindest reduziert, insbesondere erheblich reduziert bzw. gehemmt, zum Verbindungselement 7 fließen kann. Von daher könnte eine geeignete isolierende Schicht 14 beispielsweise aus Luft oder bevorzugt aus anderen geeigneten thermisch isolierenden Werkstoffen bzw. Materialien bestehen, die der zu erwartenden Temperaturbelastung in Dampfturbinen hinreichend widerstehen. Selbstverständlich weist die isolierende Beschichtung 24 der Konterelemente 22 entsprechende Eigenschaften auf, wobei zur hinreichenden Herstellung der Flanschverbindung 1 selbstverständlich alle geeigneten thermisch isolierenden Materialien bzw. Werkstoffe Verwendung finden können.

## Patentansprüche

1. Flanschverbindung zur Verbindung von Bauteilen (2, 3), die einander gegenüberliegende Flansche (4, 6) und zumindest ein Verbindungselement (7) aufweist, wobei das Verbindungselement (7) in in den Flanschen (4, 6) eingebrachten, zueinander fluchtenden Bohrungen (8, 9) aufgenommen ist,
**dadurch gekennzeichnet, dass**
die Bohrungen (8, 9) in den Flanschen (4,6) als Durchgangsbohrungen derart ausgestaltet sind, dass zwischen dem Verbindungselement (7) mit seinem Schaft (11) und einer jeweiligen Innenwand (12) der Durchgangsbohrung (8, 9) ein radialer Spalt (13) gebildet ist, der derart mit einer thermisch isolierenden Schicht (14) ausgefüllt ist, dass ein Wärmeübergang von den Flanschen (4, 6) zu dem Verbindungselement (7) zumindest verringert ist.

2. Flanschverbindung nach Anspruch 1,
**dadurch gekennzeichnet, dass**
das Verbindungselement (7) an seinen freien Enden (21) jeweils ein Konterelement (22) trägt, das zu zugeordneten Flanschoberflächen (23) thermisch isoliert ist, so dass ein Wärmeübergang von den Flanschen (4, 6) zu dem Verbindungselement (7) zumindest reduziert ist.

3. Flanschverbindung nach Anspruch 2,
**dadurch gekennzeichnet, dass**
dem Konterelement (22) bzw. den zugeordneten Flanschoberflächen (23) ein thermisch isolierendes Bauteil zugeordnet ist, das aus einem Isoliermaterial gebildet und beispielsweise als Lochscheibe ausgestaltet ist.

4. Flanschverbindung nach einem der vorhergehenden Ansprüche,
**dadurch gekennzeichnet, dass**
die isolierende Schicht (14) am jeweiligen Endbereich (27) des Schaftes (11), bezogen auf dessen Mittelbereich (26), zumindest im Montagezustand dünner ist als im Mittelbereich (26).

5. Flanschverbindung nach einem der vorhergehenden Ansprüche,
**dadurch gekennzeichnet, dass**
das Verbindungselement (7) als Schraubenbolzen mit einem gewindefreien Schaft (11) und jeweils gegenüberliegenden freien Enden (21) ausgestaltet ist, wobei die jeweiligen freien Enden (21) ein Gewinde zur Aufnahme einer Mutter aufweisen.

6. Flanschverbindung nach einem der vorhergehenden Ansprüche,
**dadurch gekennzeichnet, dass**
dass das Verbindungselement (7) als Bolzenschraube mit einem einseitig angeordneten Kopf ausgestaltet ist, wobei das Konterelement (22) an dem zum Kopf gegenüberliegenden freien Ende aufschraubbar ist.

7. Flanschverbindung nach einem der vorhergehenden Ansprüche,
**dadurch gekennzeichnet, dass**
das Verbindungselement (7) eine zentrale Kühlbohrung (28) aufweist.

8. Flanschverbindung nach Anspruch 5,
**dadurch gekennzeichnet, dass**
die zentrale Kühlbohrung (28) als Durchgangsbohrung ausgestaltet ist.

9. Turbine mit zumindest einer Flanschverbindung nach einem der vorhergehenden Ansprüche.
